# EUROPEAN PATENT SPECIFICATION

(11) **EP 0 577 293 B1**
(45) Date of publication and mention of the grant of the patent: **28.02.1996**
(21) Application number: 93304704.5
(22) Date of filing: 16.06.1993
(51) Int. Cl.: G07F 13/10, B65G 59/10

(54) **Method and apparatus for dispensing cups in beverage-vending machines**
Verfahren und Einrichtung zur Ausgabe von Bechern in Getränkeverkaufautomaten
Méthode et appareil pour la distribution de gobelets dans des machines de vente de boissons

(30) Priority: 01.07.1992 GB 9214034
(43) Date of publication of application: 05.01.1994
(73) Proprietor: KRAFT JACOBS SUCHARD LTD., Cheltenham, Glos, GL50 3AE (GB)
(72) Inventor: Newman, Alec Thomas, Banbury, Oxfordshire OX17 1BU (GB); Saunders, Anthony Kevin, Kidlington, Oxfordshire OX5 3BY (GB)
(74) Representative: Allard, Susan Joyce

(56) References cited:
- EP-A- 0 339 946
- EP-A- 0 424 580
- DE-A- 1 957 652
- GB-A- 2 042 482
- GB-A- 2 254 319

## Description

This invention relates to a method and apparatus for dispensing the bottom cup from a selected stack of cups, and also to vending machines for beverages.

Vending machines are known for dispensing a variety of different beverages selected by the user. For this purpose, cups containing different basic ingredients are arranged in separate stacks so that when a particular beverage is selected by the user, the bottom cup in the respective stack is caused to be stripped or otherwise separated from the stack and supplied to a pick up position accessible to the user.

In the specification of European Patent Application No. 89304127.7, EP-A- 0339946, a plurality of stacks of cups are disposed vertically in a circle on a carriage in the manner of a carousel. On selection of a particular stack, the carriage is rotated until the selected stack reaches a dispensing position, and the bottom cup of the selected stack is stripped from the stack without stopping the carousel. Separating means comprising levers are provided for stripping the bottom cup from the stack. The separated cup is then forwarded to the pick up position. Preferably the cups in each stack are pre-packed with one beverage ingredient, another beverage ingredient optionally being added at an intermediate position, and a further beverage ingredient added at the pick up position.

GB-A-2 254 319 discloses a dispensing apparatus in which a plurality of stacks of cups are disposed vertically in a circular path above a circular track. During operation the bottom cup of a selected stack is dropped onto the circular track and conveyed around it by a rotating arm to a pick-up position.

An object of the invention is to achieve a compact design.

According to the invention there is provided a method of dispensing the bottom cup from a selected stack of cups in a vending machine comprising supporting a plurality of stacks of cups arranged in succession, selecting one of the stacks from which a cup is to be dispensed, causing the bottom cup of the selected stack to drop to a position beneath the remainder of the stack, and conveying the cup being dispensed from its dropped position to a pick up position accessible to the user, characterised in that the stacks of cups are arranged along a path conforming substantially to a spiral, and the cup being dispensed is conveyed from its dropped position along the path of the spiral and subsequently to the pick up position.

The path of the cups preferably extends for substantially one turn or more than one turn of the spiral about its centre.

Preferably the pick up position is also a treatment position.

The method preferably includes the step of supplying water or carbonated fluid to the cup being dispensed at the pick up position.

It is also preferred to include pausing the cup at an intermediate treatment position between its dropped position and the pick up position.

Preferably the cup being dispensed has a beverage ingredient added at the intermediate treatment position, or is pre-packed with one beverage ingredient and has another beverage ingredient added at the intermediate treatment position.

The cup being dispensed preferably follows initially the path of the spiral downstream of its dropped position, and then continues outwardly of the continuing path around the centre of the spiral, to the pick up position.

Preferably the cup being dispensed drops onto a base surface and is pushed along the base surface from its dropped position, through any downstream intermediate treatment position, to the pick up position. The cup being dispensed is preferably pushed by a rotary arm which is rotatable about a vertical axis.

The invention also provides apparatus for dispensing the bottom cup from a selected stack of cups in a vending machine comprising means for supporting a plurality of stacks of cups arranged in succession, means for selecting one of the stacks from which a cup is to be dispensed, means for causing the bottom cup of the selected stack to drop to a position beneath the remainder of the stack, and means for conveying the cup being dispensed from its dropped position to a pick up position accessible to the user, characterised in that the stacks of cups are arranged along a path conforming substantially to a spiral, and the conveying means are operable to convey the cup being dispensed from its dropped position along the path of the spiral and subsequently to the pick up position.

Preferably the path of the cups extends for substantially one turn or more than one turn of the spiral about its centre.

There is preferably provided a base surface onto which the cup being dispensed drops, the base surface extending along the conveying path between a position beneath the first stack of cups and the pick up position. The base surface preferably follows initially the path of the spiral at least to the last stack position, and then continues outwardly of the continuing path around the centre of the spiral, to the pick up position.

The conveying means is preferably a rotary arm which is rotatable about a vertical axis, which arm pushes the cup being dispensed from its dropped position until the outer end of the arm passes inside the path of the cup being dispensed, leaving the cup at the pick up position.

Preferably the base surface has a peripheral wall, and the rotary arm is shaped so that the outer end part is trailing which tends to push the cup being dispensed outwardly into contact with the peripheral wall and thereby assist the direction of the cup.

The rotary arm preferably has a starting position ahead, in the direction of rotation, of the last stack of cups, and a cycle of one or more revolutions, the arm contacting the cup being dispensed during the first revolution and the outer end of the arm passing inside the path of the cup during the same or a subsequent revolution.

Preferably there is provided an intermediate treatment position, and means at the intermediate treatment position for introducing a beverage ingredient into the cup being dispensed when the cup reaches the intermediate treatment position. In one embodiment the intermediate treatment position is provided between the last stack position and the pick up position.

Means are also preferably provided at the pick up position for supplying water or carbonated fluid into the cup being dispensed.

The invention further provides a vending machine having an apparatus for dispensing the bottom cup of a selected stack of cups as defined above.

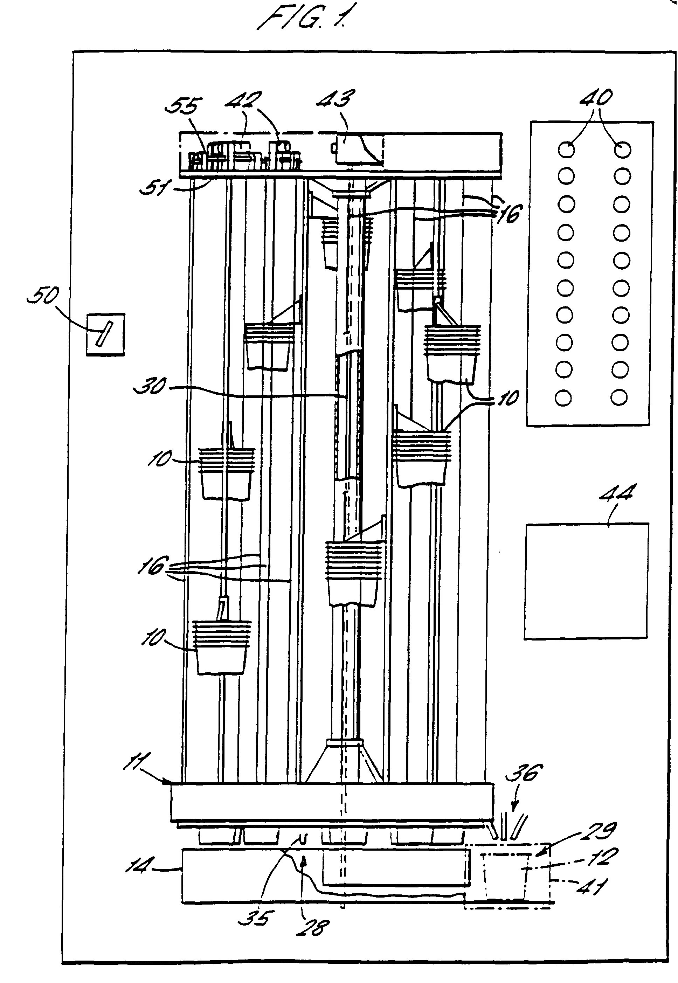

By way of example, a specific embodiment in accordance with the invention will be described with reference to the accompanying diagrammatic drawings in which:-
Figure 1 illustrates a vending machine for dispensing the bottom cup from a selected stack of cups to a pick up position at which the cup is accessible to the user;
Figure 2 shows, in horizontal section, the arrangement of stacks of cups supported around a vertical axis;
Figures 3 and 4 show the operation of the stripping means for separating the bottom cup from the selected stack of cups; and
Figures 5 to 8 indicate the steps of conveying the cup to be dispensed from the dropped position to the pick up position.

Referring to the drawings, there is shown a vending machine for dispensing in cups a variety of beverages selected by the user. As in previous machines of this kind, the machine has an intermediate treatment position 28 and a combined pick up/liquid dispensing position 29 at which the cup is accessible to the user. It is thus sufficient to state that generally each basic ingredient, e.g. coffee, tea, chocolate, soup, fruit beverage etc. as required, is pre-packed in cups 10 which are stacked vertically. When a beverage is required, the machine is operated by the user selecting the appropriate stack of cups to dispense the bottom cup 12 of the stack and to add the necessary other ingredients, e.g. sugar and/or water or carbonated fluid, to produce the beverage. In this embodiment, to select the required beverage the machine is coin-operated by inserting coins through slot 50. Alternatively, the machine may be card operated, or free vend, as desired.

Operating buttons 40 are provided relating to a given basic ingredient and selectively with or without sugar, or hot or cold water, or cold water or carbonated fluid. When one of the buttons 40 is pressed, the machine is actuated to separate the bottom cup 12 from the appropriate stack of cups 10 and to convey the separated cup to the intermediate treatment position 28 for adding sugar, if required, through means 35. The cup is then forwarded to the pick up position 29 which, in this embodiment, is also the liquid dispensing position at which hot or cold water, or carbonated fluid is introduced into the cup through means 36. Should the selected stack be empty, the machine will signal "sold out". At the pick up position there is a sliding door 41 whereby the cup which has been dispensed is available to the user.

The invention is concerned with the arrangement of the stacks of cups in relation to the pick up/liquid dispensing position 29, and the means for conveying the bottom cup 12 of the selected stack from its dropped position to the user. Other details of the machine are conventional and need not be described further.

A plurality of stacks of cups 10 are supported vertically on a turret 11. The turret 11 is manually movable, e.g. rotatable, to assist loading the machine with fresh supplies of cups, but otherwise remains stationary during the operation of the machine. In this embodiment, the cups 10 are of the kind which are pre-packed with a basic beverage ingredient, but there may be at least one stack of empty cups if desired.

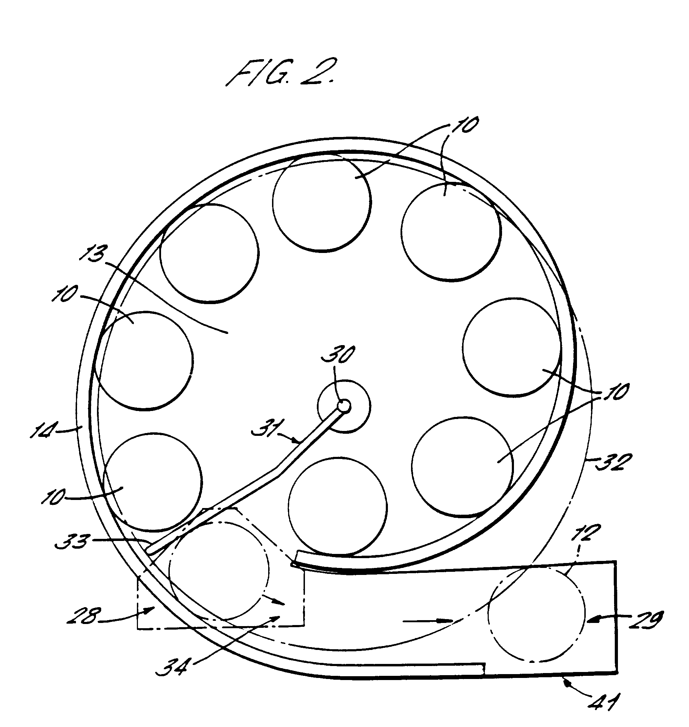

As viewed in horizontal section in Figure 2, eight stacks of cups 10 are arranged spaced apart, in succession, in an anti-clockwise direction along an arcuate path conforming, in this embodiment, substantially to one turn of a spiral about its centre. As illustrated, the first three stacks 10 are positioned at a progressively increasing radius from the centre of the spiral, and the remaining stacks are positioned at a larger but constant radius. The term "spiral" thus includes an arcuate path along which the succession of stacks of cups 10 at least begins at a lesser radius from the centre of the spiral, than it ends. In other embodiments there may be a different number of stacks of cups, e.g. twelve stacks, arranged along a similar spiral path. In the case of twelve stacks, it may be convenient for the first four stacks of cups to be arranged at a progressively increasing radius from the centre of the spiral relative to the other stacks. The stacks of cups may also be arranged along a spiral path which conforms to less or more than one turn about the centre of the spiral.

Beneath the turret 11 is a fixed floor 13 onto which the cup 12 to be dispensed is dropped and which provides a base surface on which the cup 12 is conveyed to the pick up/liquid dispensing position 29 and the user. Extending around the periphery of the floor 13 is a wall 14 which defines a path along which the cup 12 is conveyed. At the upstream or inner end of the path, the wall is spaced above the floor 13 for the purpose described below.

With respect to the first or innermost stack of cups 10, this path defined by the wall 14 follows the spiral arrangement of the stacks of cups to the intermediate treatment position 28 which in this embodiment is immediately downstream of the last stack position, but which could be coincident with the last stack position. At the intermediate treatment position 28 the supply means 35 are provided for adding a beverage ingredient or another beverage ingredient which, in this embodiment, is sugar, to the cup 12 being dispensed. Also, because of the spiral arrangement of the stacks, the peripheral wall 14 overlaps itself and defines a gate 34 through which the cup 12 being dispensed is conveyed to the pick up/liquid dispensing position 29, the cup being directed in a direction having a radially outward component relative to the centre of the spiral, which in this embodiment is substantially tangential to the continuing path, taken through the centre of the cup, around the centre of the spiral.

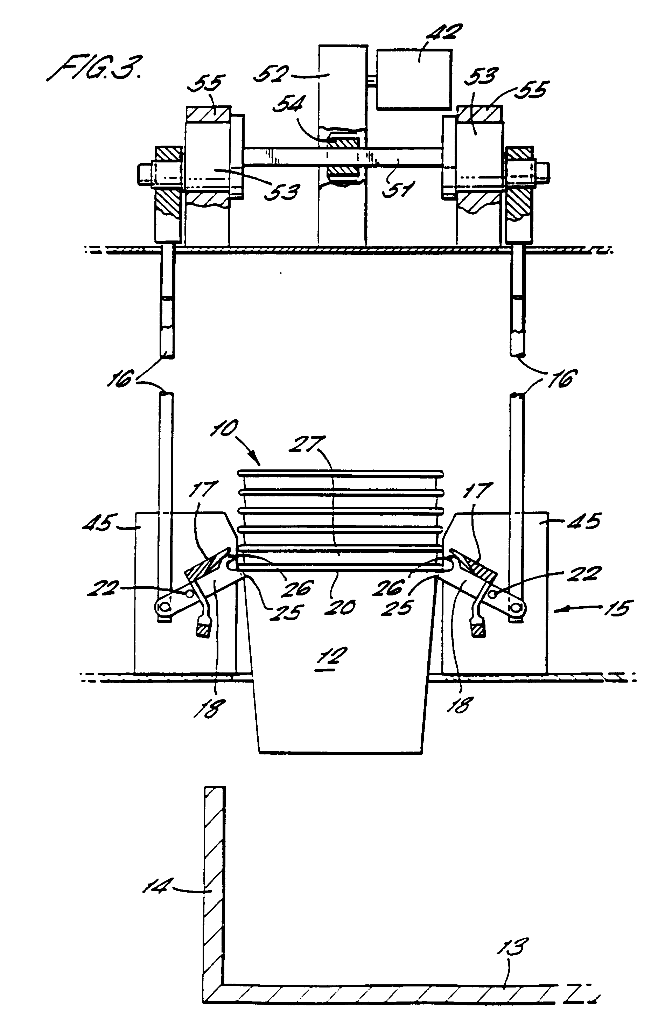

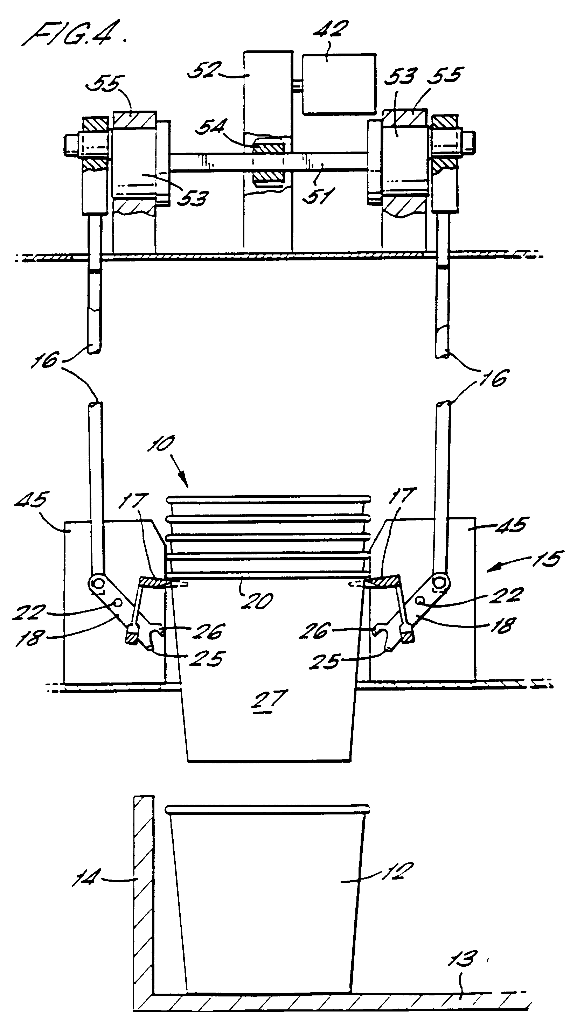

At the lower end of each stack (see Figures 3 and 4) there are provided means 15 for stripping the bottom cup 12 from the stack which is selected. The stripping means 15 are basically conventional but are operated in this embodiment by a pair of vertically movable rods 16 interconnected at their top ends by a common drive shaft 51 which is of square cross-section and in driving connection with an electric motor 42 via a gear box 52. On each end of the shaft 51 is a cam 53 mounted for rotation in a bearing 55 and to which the top end of the respective rod 16 is eccentrically attached. Mounted substantially centrally on the shaft 51, in rotationally fixed relation therewith, is the output gear 54 of the gear box 52. Operation of the motor 42 rotates the shaft 51 and the cams 53 through one revolution and thereby applies a reciprocal upward/downward movement to both rods 16 which causes the bottom cup 12 to be separated. Each stripping means 15 comprises diametrically opposed pairs of levers 17, 18 mounted on fixed side plates 45. The upper lever 17 of each pair is attached at its bottom end to the associated plate 45 and has the flexibility of a leaf spring to allow movement of the lever between an outwardly bowed position (Figure 3) and a position extending substantially horizontally beneath the rim 20 of the penultimate cup 27 of the respective stack (Figure 4). The lower lever 18 of each pair is mounted on the associated plate 45 by a pivot pin 22 and has a forked inner end. The bottom arm 25 of the forked end of each lower lever 18 serves to support the stack of cups 10 by engagement beneath the rim 20 of the bottom cup 13. The top arm 26 of the fork acts to positively separate or strip the bottom cup 12 from the stack, on downward pivotal movement of the forked end of the associated lower lever 18. Outward bowing of each upper lever 17 is effected by upward pivotal movement of the associated lower lever 18 to contact the underside of the upper lever, whilst inward movement of the upper lever is effected by its own resilience when the forked end of the lower lever is pivoted downwardly to strip the bottom cup. Each lower lever 18 is pivotally connected to the bottom end of its respective rod 16.

Figure 3 shows the initial positions of the stripping levers 17, 18, the stack of cups 10 being supported on the bottom arms 25 of the forked ends of the lower levers 18. On upward movement of the rods 16 by operation of the respective motor 42, the forked ends of the lower levers 18 pivot downwardly (Figure 4) to cause the top arms 26 of the forked ends of the lower levers 18 to strip the bottom cup 12 from the stack 10. At the same time the remainder of the stack also drops and is caught by the upper levers 17 moving inwardly beneath the rim 20 of the penultimate cup 27. The separated bottom cup 12 drops onto the floor 13 in a position beneath its stack (Figure 4). Meanwhile the return downward movement of the reciprocating cycle of the rods 16 pivots the lower levers 18 to lift the forked ends so that the upper levers are bowed outwardly by the top arms 26 of the forked ends, and the bottom arms 25 engage beneath the rim 20 of the previously penultimate cup 27 which is then at the bottom of the stack.

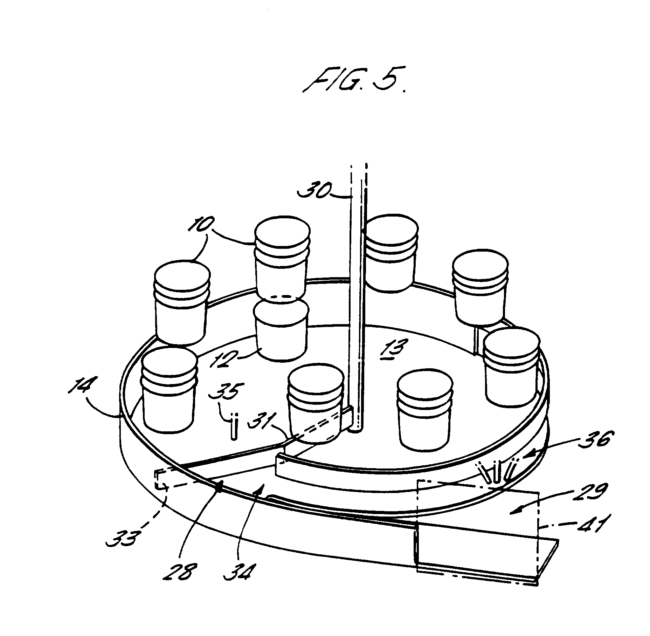

For conveying the cup 12 from its dropped position (Figures 4 and 5) laterally to the pick up/liquid dispensing position 29, there is provided a rotary arm 31 carried by a vertical shaft 30. The shaft 30 and thereby the arm 31 is rotatable by an electric motor 43 which is controlled by a microprocessor 44 to operate continuously or in steps, as desired, and at a substantially constant or varying speed. For the purpose of this embodiment, the arm 31 is controlled to move through one revolution at a time at a constant speed, and is paused at the intermediate treatment position 28 between successive revolutions. However, in another embodiment the arm may only be slowed at the intermediate treatment position. The circular path of the outer end of the arm 31 is indicated by the dot-dash line 32, and the arm 31 is designed to pass between the floor 13 and the lower edge of the peripheral wall 14 where the wall protrudes inwardly of the circular area swept by the arm 31. The arm 31 is also shaped so that the outer end part 33 is trailing which causes the arm to push the cup 12 being dispensed outwardly against the internal surface of the peripheral wall 14. This action of the arm 31 assists to direct the cup 12 to follow the desired path, especially downstream of the intermediate treatment position 28 where the cup is pushed through the gate 34 defined by the peripheral wall 14 to the pick up/liquid dispensing position 29.

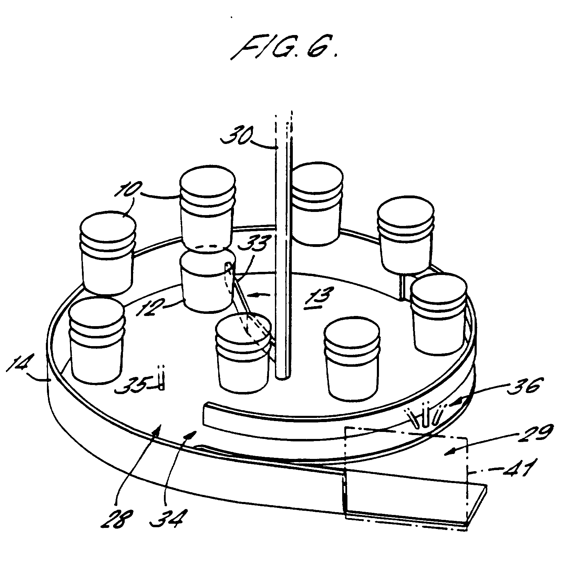

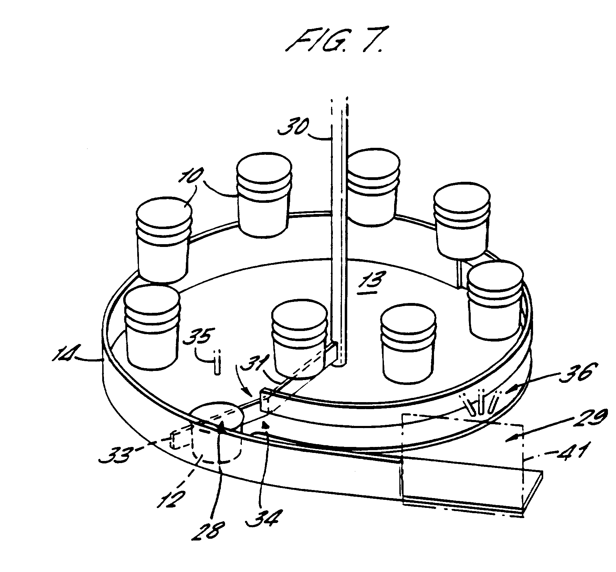

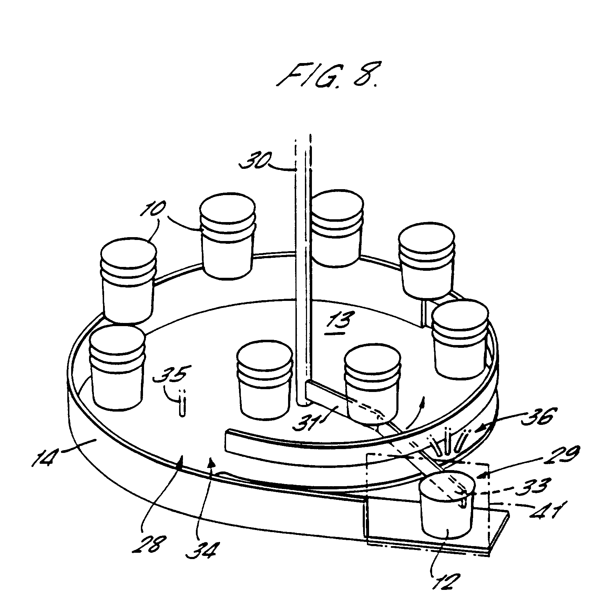

In this embodiment, the rotary arm 31 has a starting position (Figure 5) which is ahead, in the direction of rotation, of the last stack of cups 10, and each operating cycle involves two revolutions of the arm. During the first revolution, the arm 31 makes contact with the cup 12 to be dispensed at the dropped position beneath the selected stack from which the cup has been separated (Figure 6), and conveys the cup to the intermediate treatment position 28 (Figure 7). After a desired delay, if required, for the addition of a beverage ingredient into the cup, the arm 31 makes its second revolution. At first the cup continues to move along a rotary path around the axis of the shaft 30, passing through the gate 34 defined by the peripheral wall 14. Subsequently, the peripheral wall 14 follows a linear path allowing the cup 12, which maintains contact with the inside surface of the wall, to be directed substantially tangentially to the continuing circular path 32 of the arm 31 (see Figure 2). This means that the outer end of the arm 31 passes inside the cup 12, leaving the cup at the pick up/liquid dispensing position 29 (Figure 8). On completing its second revolution, the arm 31 is stopped so that the arm is again positioned as shown in Figure 5 ready for the next operating cycle.

In operation, the user employs the buttons 40 to select the beverage required which comprises a combination of one of the stacks of cups 10, sugar if required at the intermediate treatment position 28, and a liquid, in this embodiment, hot or cold water or carbonated fluid at the pick up/liquid dispensing position 29. The stripping means 15 associated with the selected stack are actuated by operation of the respective motor 42 to separate the bottom cup 12 of the stack so that it drops onto the floor 13 below (Figures 4 and 5). The main drive motor 43 is then actuated to rotate the arm 31 through its first revolution during which the arm makes contact with the cup 12 to be dispensed (Figure 6), and pushes the cup along the floor 13 to the intermediate treatment position 28 (Figure 7), the trailing outer end part 33 of the arm directing the cup outwardly and maintaining the cup in contact at its rim with the peripheral wall 14 of the floor. If sugar is to be added through supply means 35, the rotary arm 31 is paused, in this embodiment, when the cup 12 is at the intermediate treatment position. After the set time delay, the motor 43 is again actuated to rotate the arm through its second revolution. During the first part of the rotation, the cup 12 is pushed by the arm 31 through the gate 34 to the pick up/liquid dispensing position 29. The arm 31 then passes inside of the cup (Figure 8), thereby leaving the cup at the liquid dispensing position, and returns to its starting position (Figure 5). Meanwhile, the desired liquid is dispensed into the cup 12 through means 36, and the cup is accessible to the user by opening the sliding door 41.

The precise stopping position of the arm 31 at the end of its second revolution is not entirely critical providing that the arm has not reached the first stack of cups 10. However, the second complete revolution of the arm 31 can be used to monitor that another cup has not dropped in error onto the floor 13. If a cup is sensed by the arm 31, a warning signal is given so that the cup can be removed before the machine becomes operative to begin the following cycle. Alternatively, this monitoring of the cup path can be achieved during a further rotation of the arm 31 before the machine becomes operative for the next user.

It will be appreciated that it is not essential that the intermediate treatment position is located downstream of the last stack of cups. Instead, the intermediate treatment position may be located downstream of those stacks which require an intermediate treatment stage and upstream of other stacks for which e.g. no sugar is required. In such an arrangement, one revolution of the arm 31 may be sufficient to convey the cup being dispensed from its dropped position, through the intermediate treatment position if required, to the pick up/liquid dispensing position.

The advantage of the spiral arrangement of the stacks of cups 10 described above is that it achieves a compact design in which the pick up/liquid dispensing position 29 is disposed externally of the circular path of the rotary arm 31. Thereby if any liquid is dispensed outside the cup, or perhaps is spilt by the user, at the pick up/liquid dispensing position 29, such liquid does not make contact with the rotary arm 31. Cross-contamination between successive beverages dispensed by the machine by such an occurrence is thus avoided.

Another advantage of the arrangement described is that the displacement of the pick up position from the stacks of cups within the machine precludes a user from attempting to obtain a cup without operating the machine. Such protection is also enhanced by the arm 31, in its rest position (Figure 5), constituting a physical barrier between the pick up position and the stacks of cups.

## Claims

1. A method of dispensing the bottom cup (12) from a selected stack of cups (10) in a vending machine comprising supporting a plurality of stacks of cups (10) arranged in succession, selecting one of the stacks (10) from which a cup (12) is to be dispensed, causing the bottom cup (12) of the selected stack (10) to drop to a position beneath the remainder of the stack (10), and conveying the cup (12) being dispensed from its dropped position to a pick up position (29) accessible to the user, characterised in that the stacks of cups (10) are arranged along a path conforming substantially to a spiral, and the cup (12) being dispensed is conveyed from its dropped position along the path of the spiral and subsequently to the pick up position (29).

2. A method as claimed in Claim 1, wherein the path of the cups (10) extends for substantially one turn or more than one turn of the spiral about its centre.

3. A method as claimed in Claim 1 or Claim 2, wherein the pick up position (29) is also a treatment position.

4. A method as claimed in Claim 3, including the step of supplying water or carbonated fluid to the cup (12) being dispensed at the pick up position (29).

5. A method as claimed in Claim 3 or Claim 4, including pausing the cup (12) at an intermediate treatment position (28) between its dropped position and the pick up position (29).

6. A method as claimed in Claim 5, wherein the cup (12) being dispensed has a beverage ingredient added at the intermediate treatment position (28), or is pre-packed with one beverage ingredient and has another beverage ingredient added at the intermediate treatment position.

7. A method as claimed in Claim 5 or Claim 6, wherein the cup (12) being dispensed follows initially the path of the spiral downstream of its dropped position, and then continues outwardly of the continuing path around the centre of the spiral, to the pick up position. (29).

8. A method as claimed in any one of the preceding claims, wherein the cup (12) being dispensed drops onto a base surface (13) and is pushed along the base surface from its dropped position, through any downstream intermediate treatment position (28), to the pick up position (29).

9. A method as claimed in Claim 8, wherein the cup (12) being dispensed is pushed by a rotary arm (31) which is rotatable about a vertical axis.

10. Apparatus for dispensing the bottom cup (12) from a selected stack of cups (10) in a vending machine comprising means for supporting a plurality of stacks of cups (10) arranged in succession, means for selecting one of the stacks (10) from which a cup (12) is to be dispensed, means for causing the bottom cup (12) of the selected stack (10) to drop to a position beneath the remainder of the stack (10), and means for conveying the cup (12) being dispensed from its dropped position to a pick up position (29) accessible to the user, characterised in that the stacks of cups (10) are arranged along a path conforming substantially to a spiral, and the conveying means (31) are operable to convey the cup (12) being dispensed from its dropped position along the path of the spiral and subsequently to the pick up position (29).

11. Apparatus as claimed in Claim 10, wherein the path of the cups (10) extends for substantially one turn or more than one turn of the spiral about its centre.

12. Apparatus as claimed in Claim 10 or Claim 11, wherein there is provided a base surface (13) onto which the cup (12) being dispensed drops, the base surface extending along the conveying path between a position beneath the first stack of cups and the pick up position (29).

13. Apparatus as claimed in Claim 12, wherein the base surface (13) follows initially the path of the spiral at least to the last stack position, and then continues outwardly of the continuing path around the centre of the spiral, to the pick up position (29).

14. Apparatus as claimed in any one of Claims 10 to 13, wherein the conveying means is a rotary arm (31) which is rotatable about a vertical axis, which arm pushes the cup (12) being dispensed from its dropped position until the outer end of the arm passes inside the path of the cup being dispensed, leaving the cup at the pick up position (29).

15. Apparatus as claimed in Claim 14, wherein the base surface (13) has a peripheral wall (14), and the rotary arm (31) is shaped so that the outer end part (33) is trailing which tends to push the cup (12) being dispensed outwardly into contact with the peripheral wall and thereby assist the direction of the cup.

16. Apparatus as claimed in Claim 14 or Claim 15, wherein the rotary arm (31) has a starting point ahead, in the direction of rotation, of the last stack of cups (10), and a cycle of one or more revolutions, the arm contacting the cup (12) being dispensed during the first revolution and the outer end of the arm passing inside the path of the cup during the same or a subsequent revolution.

17. Apparatus as claimed in any one of Claims 10 to 16, wherein there is provided an intermediate treatment position (28), and means (35) at the intermediate treatment position for introducing a beverage ingredient into the cup (12) being dispensed when the cup reaches the intermediate treatment position.

18. Apparatus as claimed in Claim 17, wherein the intermediate treatment position (28) is provided between the last stack position and the pick up position (29).

19. Apparatus as claimed in any one of claims 10 to 18, wherein means (36) are provided at the pick up position (29) for supplying water or carbonated fluid into the cup being dispensed.

20. A vending machine having an apparatus for dispensing the bottom cup (12) of a selected stack of cups (10) as claimed in any one of claims 10 to 19.

## Patentansprüche

1. Verfahren zur Abgabe des unteren Bechers (12) von einem ausgewählten Becherstapel (10) in einem Automaten, umfassend:
Halten einer Mehrzahl von Becherstapeln (10), welche hintereinander angeordnet sind, Auswählen eines der Stapel (10) von welchem ein Becher (12) abzugeben ist, Bewirken, daß der untere Becher (12) des ausgewählten Stapels (10) in eine Position (Fallposition) unter dem verbleibenden Stapel (10) fällt und Befördern des abgegebenen Bechers (12) von seiner Fallposition zu einer Entnahmeposition (29), welche für den Benutzer zugänglich ist,
dadurch gekennzeichnet,
daß die Becherstapel (10) längs einer Bahn angeordnet sind, welche im wesentlichen einer Spirale entspricht und daß der abgegebene Becher (12) von seiner Fallposition längs der Bahn der Spirale und anschließend zu der Entnahmeposition (29) befördert wird.

2. Verfahren nach Anspruch 1, bei welchem die Bahn der Becher (10) sich im wesentlichen längs einer Windung oder mehr als einer Windung der Spirale um deren Mitte erstreckt.

3. Verfahren nach Anspruch 1 oder Anspruch 2, bei welchem die Entnahmeposition (29) ferner eine Behandlungsposition ist.

4. Verfahren nach Anspruch 3, umfassend den Schritt des Zuführens von Wasser oder kohlensäurehaltigem Fluid zu dem abgegebenen Becher (12) in der Entnahmeposition (29).

5. Verfahren nach Anspruch 3 oder Anspruch 4, umfassend Anhalten des Bechers (12) in einer Zwischenbehandlungsposition (28) zwischen seiner Fallposition und der Entnahmeposition (29).

6. Verfahren nach Anspruch 5, bei welchem dem abgegebenen Becher (12) eine Getränkezutat in der Zwischenbehandlungsposition (28) hinzugegeben wird oder der Becher (12) mit einer Getränkezutat vorbestückt ist und ihm eine weitere Getränkezutat in der Zwischenbehandlungsposition hinzugegeben wird.

7. Verfahren nach Anspruch 5 oder Anspruch 6, bei welchem der abgegebene Becher (12) anfangs der Bahn der Spirale von seiner Fallposition stromabwärts folgt und sich dann außerhalb der fortlaufenden Bahn um die Mitte der Spirale zu der Entnahmeposition (29) weiterbewegt.

8. Verfahren nach einem der vorhergehenden Ansprüche, bei welchem der abgegebene Becher (12) auf eine Basisfläche (13) fällt und längs der Basisfläche von seiner Fallposition gegebenenfalls über die stromabwärtige Zwischenbehandlungsposition (28) zu der Entnahmeposition (29) geschoben wird.

9. Verfahren nach Anspruch 8, bei welchem der abgegebene Becher (12) von einem Dreharm (31) geschoben wird, der um eine vertikale Achse drehbar ist.

10. Vorrichtung zur Abgabe des unteren Bechers (12) von einem ausgewählten Becherstapel (10) in einem Automaten, umfassend Mittel zum Halten einer Mehrzahl von Becherstapeln (10), welche nacheinander angeordnet sind, Mittel zum Auswählen eines der Stapel (10) von welchem ein Becher (12) abzugeben ist, Mittel zum Bewirken, daß der untere Becher (12) des ausgewählten Stapels (10) in eine Position unter dem verbleibenden Stapel (10) fällt und Mittel zum Fördern des abgegebenen Bechers (12) von seiner Fallposition zu einer Entnahmeposition (29),
welche für den Benutzer zugänglich ist,
dadurch gekennzeichnet,
daß die Becherstapel (10) längs einer im wesentlichen einer Spirale entsprechenden Bahn angeordnet sind und die Fördermittel (31) betreibbar sind, um den abgegebenen Becher (12) von seiner Fallposition längs der Bahn der Spirale und anschließend zu der Entnahmeposition (29) zu befördern.

11. Vorrichtung nach Anspruch 10, bei welcher sich die Bahn der Becher (10) über im wesentlichen eine Windung oder mehr als eine Windung der Spirale um deren Mitte erstreckt.

12. Vorrichtung nach Anspruch 10 oder Anspruch 11, bei welcher eine Basisfläche (13) vorgesehen ist, auf welche der abgegebene Becher (12) fällt, wobei die Basisfläche sich längs der Förderbahn zwischen einer Position unterhalb des ersten Becherstapels und der Entnahmeposition (29) erstreckt.

13. Vorrichtung nach Anspruch 12, bei welcher die Basisfläche (13) anfangs der Bahn der Spirale wenigstens zu der letzten Stapelposition folgt und dann außerhalb der fortlaufenden Bahn um die Mitte der Spirale zur Entnahmeposition (29) weiterverläuft.

14. Vorrichtung nach einem der Ansprüche 10 bis 13, bei welchem das Fördermittel ein Dreharm (31) ist, welcher um eine vertikale Achse drehbar ist, wobei der Arm den abgegebenen Becher (12) von seiner Fallposition schiebt bis sich das äußere Ende des Arms innerhalb der Bahn des abgegebenen Bechers vorbeibewegt und dabei den Becher in der Entnahmeposition (29) läßt.

15. Vorrichtung nach Anspruch 14, bei welcher die Basisfläche (13) eine Umfangswand (14) aufweist und der Dreharm (31) derart geformt ist, daß der äußere Endabschnitt (33) nachläuft, wodurch er den abgegebenen Becher (12) nach außen in Kontakt mit der Umfangswand zu schieben sucht und dadurch die Richtung des Bechers unterstützt.

16. Vorrichtung nach Anspruch 14 oder Anspruch 15, bei welcher der Dreharm (31) einen Startpunkt aufweist, welcher in Drehrichtung vor dem letzten Becherstapel (10) liegt, sowie einen Zyklus von einem oder mehreren Umläufen, wobei der Arm mit dem abgegebenen Becher (12) während des ersten Umlaufes in Kontakt tritt und während des gleichen oder eines nachfolgenden Umlaufs das äußere Ende des Arms innerhalb der Bahn des Bechers vorbeiläuft.

17. Vorrichtung nach einem der Ansprüche 10 bis 16, bei welcher eine Zwischenbehandlungsposition (28) vorgesehen ist sowie Mittel (35) in der Zwischenbehandlungsposition zum Einführen einer Getränkezutat in den abgegebenen Becher (12), wenn der Becher die Zwischenbehandlungsposition erreicht.

18. Vorrichtung nach Anspruch 17, bei welcher die Zwischenbehandlungsposition (28) zwischen der letzten Stapelposition und der Entnahmeposition (29) vorgesehen ist.

19. Vorrichtung nach einem der Ansprüche 10 bis 18, bei welcher Mittel (36) in der Entnahmeposition (29) zum Zuführen von Wasser oder kohlensäurehaltigem Fluid in den abgegebenen Becher vorgesehen sind.

20. Automat mit einer Vorrichtung zur Abgabe des unteren Bechers (12) eines ausgewählten Becherstapels (10) nach einem der Ansprüche 10 bis 19.

## Revendications

1. Procédé de distribution du gobelet inférieur (12) d'une pile choisie de gobelets (10) dans un distributeur automatique, consistant à supporter plusieurs piles de gobelets (10) disposées en une succession, à choisir l'une des piles (10) dont un gobelet (12) doit être distribué, à faire tomber le gobelet inférieur (12) de la pile choisie (10) pour le mettre à une position située sous le reste de la pile (10) et à transporter le gobelet (12) en cours de distribution de sa position de chute à une position de prélèvement (29) accessible à l'utilisateur, caractérisé en ce que les piles de gobelets (10) sont placées le long d'un trajet épousant sensiblement la forme d'une hélice et le gobelet (12) en cours de distribution est transporté de sa position de chute le long du trajet de l'hélice et ensuite vers la position de prélèvement (29).

2. Procédé selon la revendication 1, suivant lequel le trajet des gobelets (10) se prolonge sur sensiblement une spire ou plus d'une spire de l'hélice autour du centre de celle-ci.

3. Procédé selon la revendication 1 ou la revendication 2, dans lequel la position de prélèvement (29) est aussi une position de traitement.

4. Procédé selon la revendication 3, comprenant l'étape de déversement d'eau ou de fluide carbonaté dans le gobelet (12) qui est distribué mis en position de prélèvement (29).

5. Procédé selon la revendication 3 ou la revendication 4, comprenant l'immobilisation du gobelet (12) à une position intermédiaire de traitement (28) située entre sa position de chute et la position de prélèvement (29).

6. Procédé selon la revendication 5, suivant lequel un ingrédient de boisson est déversé à la position intermédiaire de traitement (28) dans le gobelet (12) en cours de distribution ou celui-ci est préemballé avec un ingrédient de boisson et un autre ingrédient de boisson y est déversé à la position intermédiaire de traitement.

7. Procédé selon la revendication 5 ou la revendication 6, suivant lequel le gobelet (12) en cours de distribution suit initialement le trajet de l'hélice vers l'aval de sa position de chute, puis poursuit sa course vers l'extérieur du trajet suivi autour du centre de l'hélice et vers la position de prélèvement (29).

8. Procédé selon l'une quelconque des revendications précédentes, suivant lequel le gobelet (12) en cours de distribution tombe sur une surface de base (13), puis est poussé le long de la surface de base de sa position de chute vers la position de prélèvement (29) en passant par une position intermédiaire quelconque de traitement (28) située en aval de la première.

9. Procédé selon la revendication 8, suivant lequel le gobelet (12) en cours de distribution est poussé par un bras rotatif (31) qui est rotatif autour d'un axe vertical.

10. Appareil de distribution du gobelet inférieur (12) d'une pile choisie de gobelets (10) dans un distributeur automatique, comprenant un moyen de support de plusieurs piles de gobelets (10) disposées en une succession, un moyen de sélection de l'une des piles (10) dont un gobelet (12) doit être distribué, un moyen pour faire tomber le gobelet inférieur (12) de la pile choisie (10) pour le mettre à une position située au-dessous du reste de la pile (10) et des moyens pour transporter le gobelet (12) en cours de distribution de sa position de chute à une position de prélèvement (29) accessible à l'utilisateur, caractérisé en ce que les piles de gobelets (10) sont disposées le long d'un trajet épousant sensiblement la forme d'une hélice et les moyens de transport (31) peuvent être actionnés pour transporter le gobelet (12) en cours de distribution de sa position de chute le long du trajet de l'hélice et ensuite à la position de prélèvement (29).

11. Appareil selon la revendication 10, dans lequel le trajet des gobelets (10) se prolonge sur sensiblement une spire ou plus d'une spire de l'hélice, autour du centre de celle-ci.

12. Appareil selon la revendication 10 ou la revendication 11, dans lequel il est prévu une surface de base (13) sur laquelle le gobelet (12) en cours de distribution tombe, la surface de base se prolongeant le long du trajet de transport entre une position située sous la première pile de gobelets et la position de prélèvement (29).

13. Appareil selon la revendication 12, dans lequel la surface de base (13) suit initialement le trajet de l'hélice au moins jusqu'à la position de la dernière pile et ensuite se poursuit vers l'extérieur du trajet suivi autour du centre de l'hélice jusqu'à la position de prélèvement (29).

14. Appareil selon l'une quelconque des revendications 10 à 13, dans lequel le moyen de transport est un bras rotatif (31) qui est rotatif autour d'un axe vertical, ledit bras poussant le gobelet (12) en cours de distribution de sa position de chute jusqu'à ce que l'extrémité extérieure du bras passe à l'intérieur du trajet du gobelet en cours de distribution en quittant le gobelet à la position de prélèvement (29).

15. Appareil selon la revendication 14, dans lequel la surface de base (13) comporte une paroi périphérique (14) et le bras rotatif (31) est conformé de manière que la partie extérieure d'extrémité (33) soit décalée vers l'arrière et tende à pousser le gobelet (12) en cours de distribution vers l'extérieur et en contact avec la paroi périphérique et ainsi contribue à diriger le gobelet.

16. Appareil selon la revendication 14 ou la revendication 15, dans lequel le bras rotatif (31) a un point de départ qui est en avant, dans le sens de la rotation, de la dernière pile de gobelets (10) et a un cycle d'un ou de plusieurs tours, le bras entrant en contact avec le gobelet (12) en cours de distribution pendant le premier tour et l'extrémité extérieure du bras passant à l'intérieur du trajet du gobelet pendant le même tour ou un tour suivant.

17. Appareil selon l'une quelconque des revendications 10 à 16, dans lequel est prévue une position intermédiaire de traitement (28) ainsi qu'un moyen (35) situé à la position intermédiaire de traitement pour introduire un ingrédient de boisson dans le gobelet (12) en cours de distribution lorsque le gobelet atteint la position intermédiaire de traitement.

18. Appareil selon la revendication 17, dans lequel la position intermédiaire de traitement (28) est située entre la position de la dernière pile et la position de prélèvement (29).

19. Appareil selon l'une quelconque des revendications 10 à 18, dans lequel des moyens (36) sont prévus à la position de prélèvement (29) pour déverser de l'eau ou un fluide carbonaté dans le gobelet en cours de distribution.

20. Distributeur automatique ayant un appareil de distribution du gobelet inférieur (12) d'une pile choisie de gobelets (10) selon l'une quelconque des revendications 10 à 19.
